Europäisches Patentamt

European Patent Office

Office européen des brevets

(19)

(11) **EP 0 850 527 B1**

(12) **FASCICULE DE BREVET EUROPEEN**

(45) Date de publication et mention
de la délivrance du brevet:
**12.06.2002 Bulletin 2002/24**

(51) Int Cl.7: **H04L 25/03**

(21) Numéro de dépôt: **96931127.3**

(86) Numéro de dépôt international:
**PCT/FR96/01417**

(22) Date de dépôt: **13.09.1996**

(87) Numéro de publication internationale:
**WO 97/10664 (20.03.1997 Gazette 1997/13)**

(54) **DISPOSITIF MULTIMODE D'EGALISATION ADAPTIVE**

ADAPTIVE ENTZERRRUNGSEINRICHTUNG MIT MEHREREN MODEN

ADAPTIVE MULTIMODE EQUALISER

(84) Etats contractants désignés:
**DE GB**

(30) Priorité: **15.09.1995 FR 9510832**

(43) Date de publication de la demande:
**01.07.1998 Bulletin 1998/27**

(73) Titulaire: **FRANCE TELECOM**
**75015 Paris (FR)**

(72) Inventeurs:
• **LABAT, Joél**
**F-29470 Plougastel (FR)**
• **LAOT, Christophe**
**F-29217 Plougonvelin (FR)**
• **MACCHI, Odile**
**F-91400 Orsay (FR)**

(74) Mandataire: **Texier, Christian et al**
**Cabinet Régimbeau**
**20, rue de Chazelles**
**75847 Paris cedex 17 (FR)**

(56) Documents cités:
**EP-A- 0 512 712** **GB-A- 2 260 068**

• IEEE TRANSACTIONS ON COMMUNICATIONS,
vol. 35, no. 9, Septembre 1987, NEW YORK US,
pages 877-887, XP002005146 PICCHI & PRATI:
"Blind equalization and carrier recovery using a
"stop - and - go" decision diriected algorithm"
• GLOBAL TELECOMMUNICATIONS
CONFERENCE, 29 Novembre 1993 - 2 Décembre
1993, NEW YORK, US, pages 87-91,
XP000428411 KAMEL & BAR-NESS: "Blind
decision feedback equalization using the
decorrelation criterion"
• INTERNATIONAL CONFERENCE ON
COMMUNICATIONS, 23 - 26 Mai 1993, NEW
YORK, US, pages 1144-1148, XP000371253
HILAL & DUHAMEL: "A blind equalizer allowing
soft transition between the constant modulus
and the decision - directed algorithm for PSK
modulated signals" cité dans la demande
• IEEE TRANSACTIONS ON SIGNAL
PROCESSING, vol. 39, no. 2, Février 1991, NEW
YORK, US, pages 522-526, XP000206453 PORAT
& FRIEDLANDER: "Blind equalization of digital
communication channels using high - order
moments" cité dans la demande
• INTERNATIONAL CONFERENCE ON
ACOUSTICS, SPEECH, SIGNAL PROCESSING,
19 - 22 Avril 1994, NEW YORK, US, pages
481-484, XP000529956 FARIA DA ROCHA &
MACCHI: "A novel self - learning adaptive
recursive equalizer with unique optimum for
QAM" cité dans la demande

EP 0 850 527 B1

## Description

La présente invention est relative à un dispositif d'égalisation (ou égaliseur) pour récepteurs de systèmes de communications numériques.

Dans les systèmes de communications numériques actuels, les récepteurs comportent un certain nombre de fonctions parmi lesquelles la démodulation, c'est-à-dire la translation en bande base du signal reçu, l'égalisation, la synchronisation (rythme et porteuse), la décision et le décodage de canal.

L'égalisation consiste pour l'essentiel à évincer autant que faire se peut l'interférence entre symboles (IES), phénomène lié au fait que globalement la chaîne de transmission ne satisfait pas ce qu'il est convenu d'appeler le critère de Nyquist. Ceci peut résulter d'une mauvaise stratégie en matière de filtrage émission et réception, d'un mauvais calage des instants d'échantillonnage, ce qui ne constitue qu'un cas particulier, ou d'un phénomène à propagation par trajets multiples.

On rappelle par ailleurs, à toutes fins utiles, qu'un système de communication numérique peut être vu schématiquement comme une source émettant, à une cadence 1/T et au travers d'un canal de réponse impulsionnelle discrète donnée, des symboles à valeurs dans un alphabet généralement complexe, de dimension finie. Cette cadence d'émission constitue la rapidité de modulation et s'exprime classiquement en Baud, T désignant l'intervalle de temps séparant l'émission de deux symboles successifs (durée symbole).

Historiquement, les premiers dispositifs chargés de combattre le phénomène d'interférences entre symboles furent introduits par Lucky dans sa publication :

[1] R.W. LUCKY, "Automatic Equalization for Digital Communications", BSTJ 44, pp. 547-588, April 1965.

Il s'agissait pour l'essentiel de filtres transverses linéaires "synchrones" (utilisant un seul échantillon par durée symbole) adaptatifs, l'adaptativité étant rendue nécessaire par la nature évolutive du canal de transmission. Les coefficients du filtre transverse étaient actualisés selon un critère d'annulation (Zero Forcing selon la terminologie anglosaxonne) de l'interférence entre symboles, cette procédure conduisant à égaliser le spectre replié d'où l'appellation d'égaliseur.

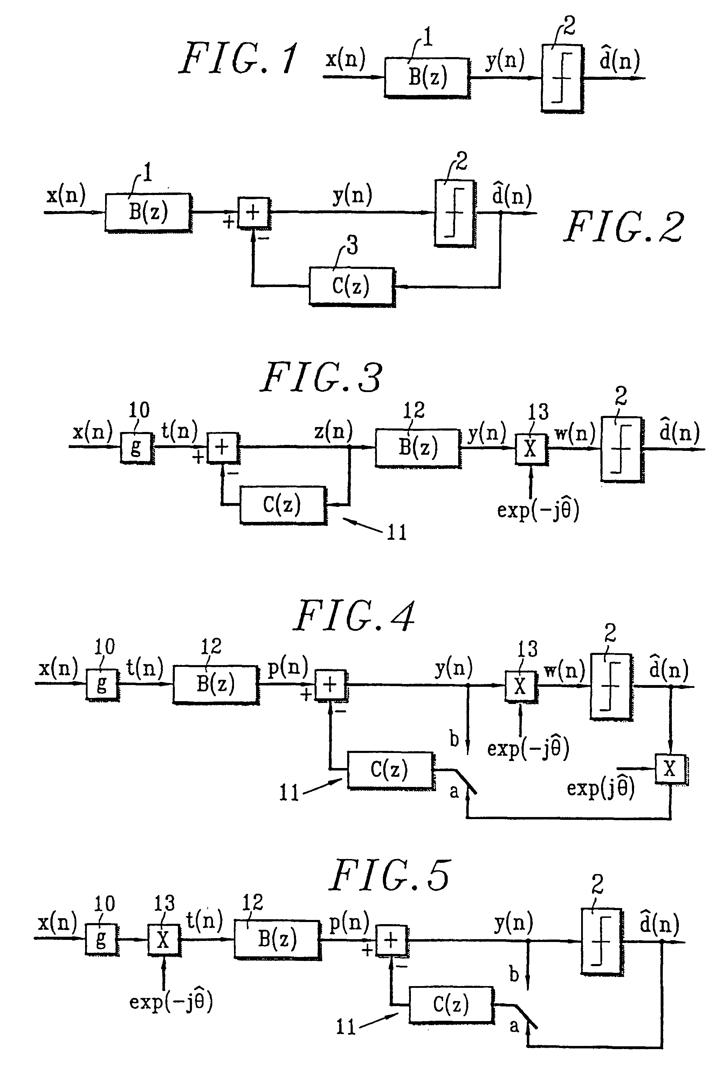

Ce principe d'égaliseur transverse est illustré sur la figure 1 sur laquelle on a représenté le filtre avant 1 de fonction de transfert B(z), ainsi que le circuit de décision 2 situé en aval du filtre avant 1.

Ce n'est que plus tard qu'apparurent les égaliseurs adaptatifs utilisant, comme critère d'optimalité, la minimisation de l'erreur quadratique moyenne. Il s'avérait en effet que, dans le cas de canaux fortement bruités, l'annulation de l'IES pouvait se traduire par une augmentation importante du bruit en sortie de l'égaliseur contribuant ainsi à une forte dégradation des performances alors qu'a contrario le critère de minimisation de l'EQM s'avérait être un compromis judicieux permettant la réduction substantielle de l'IES sans augmentation notable du bruit.

L'égalisation se faisait classiquement en deux phases. Au cours de la première, le dispositif était piloté par une séquence d'apprentissage, suffisamment longue pour garantir la convergence, puis, dans la seconde étape, il devenait auto-adaptatif c'est-à-dire qu'il était piloté par ses propres décisions.

Plus tard encore, il a été proposé, notamment dans la publication:

[2] C.A. Belfiore, J.H. Park, "Decision Feedback Equalization", Proceedings of the IEEE 67(8), August 79, des égaliseurs récursifs non linéaires à retour de décision (Decision Feedback Equalizers ou DFE), dans lesquels les données décidées étaient réinjectées, dans un filtre arrière 3 constituant la partie récursive de l'égaliseur, ainsi qu'illustré sur la figure 2.

Cette approche allait ainsi permettre, dans le meilleur des cas, de supprimer ou du moins de réduire notablement l'IES de nature causale, sous réserve bien évidemment d'absence d'erreur de décision. Cette nouvelle structure devait ainsi autoriser des performances intéressantes dans le cas de canaux particulièrement délicats. Malheureusement, ces dispositifs pouvaient dans le même temps s'avérer extrêmement sensibles aux erreurs de décision tant et si bien que dans des situations sévères on pouvait assister à un phénomène de propagation d'erreurs allant parfois jusqu'à la divergence du dispositif. Dans de telles situations, on était alors pratiquement condamné à réinitialiser le dispositif, ce qui nécessitait en clair une nouvelle séquence d'apprentissage dont le caractère périodique devenait alors indispensable. Ceci se traduisait à tout le moins, pour une application donnée, par une augmentation non négligeable du débit en ligne.

D'un autre point de vue, s'il est vrai qu'un égaliseur non linéaire à retour de décision (DFE) n'est pas optimal au regard du critère de minimisation de la probabilité d'erreur (équivalent au critère du maximum de vraisemblance a posteriori), il n'en demeure pas moins vrai que le récepteur optimal initialement décrit dans :

[3] G.D. Forney, Jr, "Maximum likelihood sequence estimation of digital sequences in the presence of intersymbol interference" IEEE Trans. Inform, Theory, vol. IT-18, pp. 363-378, May 1972,

devient rapidement irréalisable lorsque la longueur de la réponse impulsionnelle s'avère importante. En effet, un tel dispositif effectue, dans un premier temps, une estimation de la réponse impulsionnelle discrète du canal de transmission puis recherche, parmi toutes les séquences possibles, celle qui est la plus proche de l'observation (vectorielle) disponible en sortie du démodulateur. Actuellement, la mise en oeuvre de tels récepteurs passe par l'utilisation de l'algorithme de Viterbi tel que décrit dans :

[4] G. D. Forney, Jr. "The Viterbi Algorithm", Proc. IEEE, vol. 61, pp. 268-278, March 1973

dont l'un des intérêts majeurs est de permettre une prise de décision "au fil de l'eau", sans perte d'optimalité. En clair, il n'est pas nécessaire d'avoir reçu l'intégralité du message pour commencer à prendre des décisions sur la suite de symboles émis la plus vraisemblable. Cependant, et à titre d'exemple, pour une modulation à déplacement de phase à 2 états (MDP2) et dans le cas d'une réponse impulsionnelle discrète de longueur 10, le treillis associé à un tel système comporte 1024 états tandis que pour une MDP4 il en comporte 1048576, ce qui rend, ipso facto, ce type de récepteur parfaitement irréalisable, du moins pour des applications "temps réel". La difficulté s'accroît encore davantage lorsqu'on augmente la taille de l'alphabet des symboles émis. En conséquence, cette technique n'est réellement envisageable que pour des interférences courtes, sauf à tronquer arbitrairement la longueur de la réponse impulsionnelle discrète du canal de transmission, ce qui de toute évidence se traduit alors par une perte d'optimalité.

Une telle longueur d'interférence (10 durées symboles) est tout à fait classique dans un certain nombre d'applications et notamment pour les canaux radiomobiles, troposphériques, ionosphériques ou encore dans les canaux acoustiques sous-marins et même sur les lignes téléphoniques. Toutes choses égales par ailleurs, on cherchera de toute évidence à acheminer des débits de plus en plus importants sur ce type de canaux, ce qui se traduira inexorablement par un allongement de la dimension de la réponse impulsionnelle discrète. Ainsi, pour illustrer le propos, un canal acoustique sous-marin peut présenter une réponse impulsionnelle discrète de quelques dizaines de durées symbole T. Par conséquent, les égaliseurs non linéaires à retour de décision (DFE), quoique sous-optimaux, présentent un intérêt majeur évident, mais sont souvent difficilement utilisables du fait du phénomène de la propagation des erreurs.

On a vu jusqu'à présent qu'en matière d'égalisation il existait essentiellement deux structures, l'une traverse linéaire et l'autre récursive non linéaire à retour de décision (DFE), cette seconde structure apportant assurément un plus non négligeable sur certains types de canaux et amenant par ailleurs une réduction substantielle du bruit en sortie de l'égaliseur. Néanmoins, la présence indispensable d'une séquence d'apprentissage se traduit par une augmentation non négligeable du débit et donc de l'encombrement spectral associé. C'est la raison profonde qui est à l'origine d'un certain nombre de travaux actuels de recherche en matière d'égalisation autodidacte (aveugle). L'objectif est de permettre l'égalisation du canal sans l'aide d'une séquence d'apprentissage, c'est-à-dire uniquement à partir de la connaissance, légitime au demeurant, de la distribution statistique des données d'entrée.

Plusieurs auteurs ont, à ce titre, apporté une contribution non négligeable parmi lesquels :

[5] Y. Sato, "A method of self-recovering equalization for multilevel amplitude modulation", IEEE Trans. Com., COM-23, pp. 679-682, June 1975 ;

[6] D. N. Godard, "Self-recovering equalization and carrier tracking in two-dimensional data communication systems", IEEE Trans. Com., COM-28, pp. 1867-875, November 1980 ;

[7] A. Benveniste, M. Goursat, "Blind equalizers", IEEE Trans. on Com., Vol. 32, 1984, pp. 871-883 ;

[8] G. Picchi and G. Pratti, "Blind equalization and carrier recovery using a 'stop and go' decision-directed algorithm", IEEE Trans. Com., COM-35, pp. 877-887, Novembre 1987 ;

[9] O. Macchi, Yi Gu, "Self-adaptative Equalization with a mixed backward and forward predictor", ISELDECS, Kharagpur, India, pp. 437-440, Dec. 1987 ;

[10] O. Shalvi, E. Weinstein, "New criteria for blind deconvolution of nonminimum phase systems channels", IEEE Trans. Inform. Theory, vol. IT-36, No. 2, pp. 312-321, March 1990 ;

[11] B. Porat, B. Friedlander, "Blind equalization of digital communication channels using high-order moments", IEEE Trans. on Signal Processing, vol. 39, pp. 522-526, Feb 1991 ;

[12] K. Hilal, P. Duhamel, "A blind equalizer allowing soft transition between the constant modulus algorithm and the decision directed algorithm for PSK modulated signals", Internat. Conf on Comm., Geneva, Switzerland, pp. 11144-1148, May 1993.

Tous ces algorithmes font implicitement référence à des statistiques d'ordre supérieur à deux car un canal à phase non minimale nécessite pour son inversion (déconvolution) l'utilisation de tels moments.

Les premiers égaliseurs de ce type utilisèrent en général des structures transverses linéaires. Cependant d'autres auteurs et notamment O. Macchi et al. dans leurs publications :

[13] C. A. Faria Da Rocha, O. Macchi, "A novel self-learning adaptative recursive equalizer with unique optimum for QAM", ICASSP, Adélaïde 94 ;
[14] C.A. Faria Da Rocha, O. Macchi, J. M. T. Romano, "An adaptative non linear IIR filter for self-learning equalization", ITS 94, RIO DE JANEIRO s'intéressèrent à des structures récursives linéaires. L'égaliseur était alors composé essentiellement d'un filtre avant linéaire transverse (rétroprédicteur), d'un filtre arrière purement récursif (prédicteur) et d'un contrôle automatique de gain (CAG). Restait à déterminer les critères d'optimalité, dont la minimisation devait conduire à une solution aussi voisine que possible de la solution optimale au sens de Wiener.

Ces mêmes auteurs proposèrent une fonction coût originale [13], combinaison linéaire d'un critère de blanchiment (parfaitement aveugle) et d'un critère de minimisation d'erreur quadratique (estimée par rapport à la décision prise). L'idée majeure était de démarrer sur un critère aveugle pour progressivement s'orienter vers un critère de minimisation d'erreur quadratique, l'égaliseur devenant ainsi piloté par décision. Dès lors, il ne restait plus qu'à remplacer les données présentes à l'entrée du filtre arrière par les données décidées et l'on passait ainsi d'une structure linéaire récursive à une structure non linéaire récursive (DFE). Cette idée s'est avérée fort intéressante au sens où elle permettait d'égaliser des canaux là où d'autres algorithmes autodidactes échouaient. Néanmoins, en dépit du caractère original de l'idée et de son apport incontestable sur le plan de l'égalisation autodidacte, cette structure possédait un certain nombre de points qui paraissaient pouvoir être améliorés.

Dans la même année, O. Macchi et al [14] proposaient une structure constituée, pour l'essentiel, d'un prédicteur, d'un contrôle automatique de gain (CAG) et d'un filtre passe-tout comportant une partie récursive, le prédicteur ayant à charge d'égaliser le canal en amplitude, le passe-tout en phase et le CAG se chargeant de la restitution du niveau correct et réglant le problème de la récupération de la porteuse. Une rapidité de convergence accrue fut incontestablement obtenue, cependant le système ne permettait pas d'envisager une réversibilité structurelle optimale sans dégradation des performances, ce qui risquait de constituer un handicap majeur dans le cas de canaux non stationnaires.

La différence essentielle par rapport à la présente invention réside dans le fait que l'égaliseur de phase (passe-tout) décrit dans [14] comportait également une partie récursive. En conséquence, lorsque l'on passait en mode de poursuite et pour tirer pleinement profit d'une structure non linéaire à retour de décision, il était alors nécessaire, sous peine de dégradations notables des performances, de remplacer les deux filtres arrière par un filtre unique équivalent (récursif). Dès lors, il devenait impossible de revenir en arrière si d'aventure le canal s'altérait. A contrario le dispositif selon l'invention comporte un seul prédicteur purement récursif, ce qui le différencie profondément du dispositif décrit dans [14].

L'invention propose quant à elle un dispositif d'égalisation pour récepteur de système de communication numérique comportant des moyens de contrôle automatique de gain, des moyens de récupération de porteuse, des moyens pour l'égalisation en phase des données, ainsi qu'un prédicteur pour l'égalisation en amplitude des données, un circuit de décision, caractérisé en ce que le prédicteur est purement récursif, l'égaliseur de phase est purement transverse et la place relative de ces deux éléments est commutable, des moyens permettant d'évaluer des performances en termes d'erreur de décision et de commander la commutation entre les deux éléments selon un critère d'appréciation de la difficulté de réception, le prédicteur étant amont et optimisé de manière adaptative et autodidacte pour blanchir sa propre sortie tandis que l'égaliseur de phase est aval et optimisé de manière adaptative dans les périodes de réception difficile, alors que le prédicteur est aval et l'égaliseur de phase est amont, tous deux étant conjointement optimisés de manière adaptative pour minimiser l'erreur de décision entre la sortie du circuit de décision et son entrée dans les périodes de réception facile.

La structure proposée est adaptative, ce qui constitue une originalité notable.

Pendant la phase de convergence, elle se résume à la concaténation d'un gain réel, d'un prédicteur purement récursif, d'un filtre linéaire transverse et d'un correcteur de phase. La présence du filtre blanchissant en amont du filtre transverse linéaire permet à ce dernier de converger plus rapidement.

En mode de poursuite, la structure retenue est identique à la précédente, à la différence près que les deux filtres prédicteur et transverse subissent une permutation.

Ainsi, ce dispositif récursif possède le double avantage d'être parfaitement autodidacte (aveugle) dans sa phase initiale et de tendre graduellement vers un dispositif de type DFE, pilotée par décision selon un critère de minimisation de l'erreur quadratique moyenne, état dans lequel il reste naturellement tant que le canal ne se dégrade pas de manière trop significative. En revanche, lorsque les conditions de propagation rendent le canal trop sévère et que, de ce fait, l'erreur quadratique moyenne dépasse un certain seuil, alors le dispositif bascule dans une configuration aveugle, correspondant à la phase de convergence.

De ce fait, le dispositif objet de l'invention, permet d'atteindre des performances très intéressantes tant sur le plan de la convergence qu'en matière de poursuite du fait de l'adaptativité de sa structure. Cette propriété essentielle lui permet de s'adapter aux fluctuations du canal dans des situations sévères, à la différence des égaliseurs classiques de l'art antérieur.

En outre, le dispositif proposé par l'invention est particulièrement bien adapté aux canaux non stationnaires et notamment aux canaux radiomobiles, ionosphériques, troposphériques et acoustiques sous-marins.

L'invention propose également un procédé d'égalisation pour récepteur de système de communication numérique.

D'autres caractéristiques et avantages de l'invention ressortiront encore de la description qui suit. Cette description est purement illustrative et non limitative. Elle doit être lue en regard des dessins annexés sur lesquels :

- la figure 1 est un schéma de principe d'un égaliseur linéaire transverse ;
- la figure 2 est un schéma de principe d'un égaliseur à retour de décision ;
- la figure 3 est un schéma qui illustre la structure d'un dispositif conforme à un mode de réalisation possible pour l'invention en phase de convergence ;
- la figure 4 est un schéma qui illustre la structure d'un dispositif conforme à un mode de réalisation possible pour l'invention en phase de poursuite ;
- la figure 5 est un schéma qui illustre une variante de structure possible pour la phase de poursuite ;
- les figures 6a et 6b sont des graphes donnant la réponse en amplitude et en phase en fonction de la fréquence, pour un canal de type PORAT et FRIEDLAMDER ;
- la figure 7 est une représentation dans un plan complexe illustrant la position des zéros de la fonction de transfert du canal de transmission qui correspond aux figures 6a et 6b (zéros symbolisés par des +), ainsi que les pôles de la fonction de transfert $1/(1+C(z))$ du prédicteur (pôles symbolisés par des 'o'), par rapport au cercle unité ;
- les figures 8a et 8b illustrent, dans le cas d'une modulation MDP4, les constellations correspondant respectivement au signal en entrée et au signal en sortie du dispositif selon l'invention ;
- les figures 9a et 9b sont des graphes sur lesquels on a porté respectivement l'erreur quadratique instantanée et l'erreur quadratique estimée au sens des moindres carrés en fonction du nombre de symboles reçus ;
- la figure 10 est un graphe sur lequel on a porté les courbes exprimant les variances, estimées au sens des moindres carrés, des signaux $y(n)$ et de $z(n)$ en fonction du nombre de symboles reçus ;
- la figure 11 est un graphe sur lequel on a porté l'erreur quadratique moyenne en fonction du nombre de symboles calculée sur 100 épreuves ;
- les figures 12a et 12b sont des graphes donnant la réponse en amplitude et en phase en fonction de la fréquence, pour un canal mixte de type MACCHI ;
- la figure 13 est une représentation dans un plan complexe illustrant la position des zéros de la fonction de transfert du canal de transmission qui correspond aux figures 12a et 12b (zéros symbolisés par des +), ainsi que les pôles de la fonction de transfert $1/(1 + C(z))$ du prédicteur (pôles symbolisés par des 'o'), par rapport au cercle unité ;
- les figures 14a et 14b illustrent, dans le cas d'une modulation MDP4, les constellations correspondant respectivement au signal en entrée et au signal en sortie du dispositif selon l'invention ;
- les figures 15a et 15b sont des graphes sur lesquels on a porté respectivement l'erreur quadratique instantanée et l'erreur quadratique estimée au sens des moindres carrés en fonction du nombre de symboles reçus ;
- la figure 16 est un graphe sur lequel on a porté les courbes exprimant les variances, estimées au sens des moindres carrés, des signaux $y(n)$ et de $z(n)$ ;
- la figure 17 est un graphe sur lequel on a porté l'erreur quadratique moyenne en fonction du nombre d'itérations sur 100 épreuves ;
- les figures 18 et 19 sont des représentations schématiques semblables à celles des figures 3 et 4 illustrant un égaliseur fractionné conforme à l'invention.

PRESENTATION GENERALE

Le dispositif d'égalisation proposé par l'invention présente deux structures différentes selon que l'on se trouve en phase de convergence (phase 1) ou en phase de poursuite (phase 2), c'est-à-dire en régime établi. Ces deux structures sont celles illustrées sur les figures 3 et 4.

Dans la structure utilisée pendant la phase de convergence, un prédicteur purement récursif linéaire (filtre blanchissant) précède un filtre transverse lui-même autodidacte (aveugle). Dans la phase de poursuite, le filtre transverse est disposé devant le prédicteur récursif, celui-ci étant alors alimenté par les données décidées. Le critère d'optimalité devient celui de la minimisation de l'erreur quadratique moyenne aussi bien pour la partie linéaire transverse que pour la partie récursive. Il y a donc en réalité une modification structurelle accompagnée d'un changement parallèle des critères d'optimalité.

Ainsi, selon le degré de sévérité du canal et sur un critère de mesure de performance du signal de sortie comme par exemple l'erreur quadratique moyenne estimée au sens des moindres carrés (RLS), le dispositif bascule d'une structure récursive linéaire autodidacte telle qu'illustrée sur la figure 3 à une structure récursive non linéaire (DFE) décrite sur la figure 4 ou, à l'inverse, d'une structure de type DFE pilotée par décision à une structure récursive linéaire autodidacte.

Les structures correspondant d'une part à la phase de convergence et d'autre part à la phase de poursuite vont maintenant être décrites.

*. phase 1 : phase de convergence /périodes de réception difficile*

La structure correspondant à la configuration de convergence illustrée sur la figure 3 comporte un contrôle automatique de gain 10 de type réel g, un prédicteur 11 de fonction de transfert 1/(1+C(z)), un filtre transverse 12 de fonction de transfert B(z) et un dispositif 13 de compensation de l'erreur de phase. Il est important de noter que le CAG, caractérisé par le gain g, peut être situé en d'autres points de la chaîne et notamment entre le prédicteur purement récursif 11 et le filtre transverse 12 ou encore en amont ou en aval du dispositif de compensation de l'erreur de phase 13.

Le gain g est actualisé sur un critère aveugle, le prédicteur 11 sur un critère de blanchiment (égalisation en amplitude) et le filtre transverse 12 sur un critère aveugle impliquant des statistiques d'ordre supérieur à deux (égalisation en phase). Pour l'actualisation des coefficients de la partie transverse, plusieurs algorithmes peuvent être utilisés et notamment ceux des articles 1 à 14 précités.

La récupération de porteuse 13, c'est-à-dire l'estimation de l'erreur de phase résiduelle et sa compensation sous forme d'une multiplication par exp(-j θ), s'effectue, par exemple, selon un critère de minimisation d'erreur quadratique moyenne. Le signal d'erreur élaboré peut ensuite être filtré de telle sorte à retomber sur un dispositif équivalent à un asservissement de phase du second ordre (ou d'un ordre supérieur à 2 selon le type de filtre utilisé). Ce dispositif 13 peut lui aussi être situé en d'autres points de la chaîne et notamment entre le prédicteur 11 et le filtre transverse 12.

La récupération de porteuse 13 est la seule fonction, dans cette phase de convergence, à être pilotée par décision. Les autres fonctions sont optimisées à partir de critères ne s'appuyant en rien sur les décisions prises par le dispositif approprié (circuit à seuils).

Cette première étape est, en conséquence, parfaitement autodidacte (aveugle).

Mieux, chacun des dispositifs élémentaires possède son critère d'optimalité approprié, ce qui confère à l'ensemble une structure très robuste.

En outre, le prédicteur 11 blanchit les données présentes à l'entrée du filtre transverse 12 qui y trouve un intérêt non négligeable en terme de temps de convergence, dans la mesure où précisément la matrice d'autocorrélation du signal d'entrée s'avère alors mieux conditionnée.

Par ailleurs, la place respective du CAG 10 et du dispositif de récupération de porteuse n'ont a priori aucune importance dans l'absolu si l'on fait abstraction de toute considération relative à une éventuelle implantation. Ainsi, le CAG 10 (caractérisé par g) peut être situé indifféremment entre le prédicteur 11 et le filtre transverse 12, ou en amont ou en aval du dispositif de compensation de l'erreur de phase 13. Cependant, dans une perspective d'implantation, une position intéressante semble être celle illustrée sur les figures, du moins pour ce qui concerne le gain g. En effet, le situer en amont ou en aval du dispositif de compensation de l'erreur de phase 13 nécessiterait d'introduire une division en mode de poursuite (toujours délicate à implémenter) tandis que le situer entre le prédicteur et le filtre transverse se traduirait par la nécessité de stocker les données de sortie du prédicteur ainsi que les données d'entrée du filtre transverse, ce qui au demeurant ne constitue pas une très grande pénalité.

*. phase 2 : phase de poursuite/périodes de réception faciles*

Dès lors que le canal est pratiquement égalisé, ce que l'on peut déduire de l'observation de l'EQM estimée, par exemple, au sens des moindres carrés (Recursive Least Square) et plus précisément en comparant cette valeur à un seuil, on permute le prédicteur 11 récursif de fonction de transfert 1/(1 + C(z)) et le filtre linéaire transverse de fonction de transfert B(z).

La nouvelle structure ainsi obtenue (sélecteur en position b sur la figure 4) est parfaitement équivalente à la précédente du fait de la linéarité du dispositif. Il ne reste plus qu'à remplacer les données y(n) à l'entrée du filtre arrière par les données décidées à savoir d(n) exp(j θ(n-1)), préalablement corrigées en phase, et l'on retombe alors sur un DFE classique (sélecteur en position a), piloté par décision selon le critère de minimisation de l'erreur quadratique moyenne.

Bien entendu, si l'on choisit d'effectuer la multiplication par le terme exp((-j θ(n-1)) en amont, c'est-à-dire par exemple à l'entrée du dispositif ainsi qu'illustré sur la figure 5, les données y(n) sont alors remplacées par les données décidées d(n) purement et simplement mais toujours de façon progressive.

Ainsi, lors de la transition de la phase 1 vers la phase 2, le vecteur d'observation à l'entrée de la partie récursive est constitué des signaux d(n-1), y(n-2), y(n-3), ..., y(n-M). En revanche, lors du passage de la phase 2 à la phase 1, le vecteur d'observation à l'entrée de la partie récursive est constitué des signaux y(n-1), d(n-2), d(n-3), ..., d(n-M).

Par ailleurs, on se réserve la possibilité d'intégrer le CAG 10 dans le filtre transverse 12 linéaire B(z) en bloquant g à sa valeur précédente, cette action étant uniquement optionnelle car sur des signaux fortement non stationnaires, il est souhaitable de se réserver la possibilité de maintenir l'adaptation du CAG.

Cette modification de structure est parfaitement réversible. Une telle propriété est extrêmement intéressante et permet, en cas de situations sévères, de revenir graduellement à la phase de convergence, c'est-à-dire à une phase complètement autodidacte, le prédicteur purement récursif 11 cherchant de nouveau à égaliser le canal en amplitude et le filtre transverse 12 cherchant ensuite à l'égaliser en phase.

En revanche, lorsque la sévérité du canal s'atténue, cela se traduit, entre autres, par une diminution de l'erreur quadratique moyenne associée (estimée par exemple au sens des moindres carrés (RLS)) et le système bascule alors de nouveau vers une structure récursive à retour de décision et ainsi de suite. En cela, le système présente indéniablement un caractère à la fois original et particulièrement attrayant.

A la connaissance des inventeurs, il n'existe pas actuellement de dispositif de ce type effectuant une permutation des structures, c'est-à-dire en clair une permutation des parties avant et arrière de l'égaliseur.

Parallèlement à cette permutation de structures, il est procédé à un changement des fonctions coûts nécessaires à l'actualisation des coefficients des parties transverses et récursives. Dans la phase 1, ces fonctions coûts reposent exclusivement sur la connaissance de la statistique du signal d'entrée tandis que dans la phase 2 le critère d'optimalité retenu est la minimisation de l'erreur quadratique moyenne. Ces aspects sont clairement décrits dans l'annexe technique.

Enfin, et ceci constitue une autre originalité du dispositif, au cours de la phase 2, on peut, sur la base d'une estimation de vraisemblance de la donnée décidée, remplacer la donnée corrigée en phase soit $d(n)\exp((j\ \hat{\theta}(n-1))$ par la donnée $y(n)$, conformément au schéma de la figure 4 lorsque la vraisemblance de la donnée estimée est insuffisante. Ceci permet de diminuer d'autant l'impact d'erreurs de décisions isolées sur l'augmentation de l'erreur quadratique moyenne associée. Cette stratégie est de nature à apporter une robustesse supplémentaire au dispositif précédemment décrit sous réserve de disposer d'une estimation de cette vraisemblance. En l'absence de cette estimation, le commutateur est alors en position a.

Ainsi, le prédicteur peut être alimenté soit par les données estimées $\hat{d}(n)$ obtenues en sortie du circuit de décision 2 corrigées en phase, soit par les données en sortie du prédicteur 11. Le dispositif peut comporter à cet effet des moyens pour basculer de l'une à l'autre de ces alimentations (b et a sur la figure 4) selon le critère précité d'appréciation de la vraisemblance des données estimées.

DESCRIPTION DETAILLEE D'UN EXEMPLE DE REALISATION

On va maintenant décrire de façon détaillée un exemple de réalisation du dispositif d'égalisation de l'invention.

*. phase de convergence/périodes de réception difficiles*

Les équations qui régissent le fonctionnement du dispositif sont les suivantes :

$$t(n) = x(n)\ g(n-1) \tag{I-1}$$

$$z(n) - t(n)-[z(n-1) \ldots z\ (n-N)]\ C(n-1) \tag{I-2}$$

$$y(n) = B^{T}\ (n-1)\ Z(n) \tag{I-3}$$

avec $Z(n) = [z(n)\ z(n-1) \ldots z(n-L)]^{T}$ et $B = [b_{o} \ldots b_{L-1}\ b_{L}]^{T}$

$$w(n) = y(n)\exp(-j\ \hat{\theta}(n-1)) \tag{I-4}$$

A titre d'exemple, le vecteur B peut être initialisé comme suit $B=[0\ 0\ 0\ 0\ 1]^{T}$ tandis que C est le vecteur nul de dimension N. On rappelle que N doit bien entendu être choisi supérieur ou égal au nombre de zéros de la fonction de transfert F(z) du canal de transmission. De la même façon, la dimension (L+1) de l'égaliseur transverse doit être choisie suffisamment importante pour pouvoir traiter convenablement les zéros qui seraient à l'extérieur du cercle unité et au voisinage immédiat de celui-ci.

L'actualisation du gain réel g se fait selon le critère préconisé initialement dans [1] et [2].

$$G(n) = G(n-1) + \mu_G [1-|z(n)|^2]$$

$$g(n) = |G(n)| \qquad (I-5)$$

ou encore :

$$g(n) = |G(n)| \qquad (I-5bis)$$

L'actualisation de l'erreur de phase peut se faire selon une stratégie similaire de minimisation de l'erreur quadratique (estimée) pilotée par décision. Le signal d'erreur est classiquement filtré par un filtre numérique (intégrateur à avance de phase), caractérisé par deux coefficients $G_1$ et $G_2$ :

$$e(n) = Im \{w(n)[d(n)-w(n)]^*\} \qquad (I-6)$$

$$s(n) = (e \otimes f)(n) \text{ et } Z\{f(n)\} = G_1 + \frac{G_2}{1-z^{-1}} \qquad (I-7)$$

$$\hat{\theta}(n) = \hat{\theta}(n-1) + \mu_\theta \, s(n) \qquad (I-8)$$

A priori l'actualisation de la phase doit démarrer dès le départ, notamment sur les canaux dont la réponse impulsionnelle discrète est de type complexe. A contrario sur des canaux à réponse impulsionnelle réelle, une convergence plus rapide a pu être examinée lorsque l'on inhibe l'actualisation pendant les premières itérations. Ceci s'explique par le fait que dans ce cas il y a tout intérêt à n'introduire des critères pilotés par décision qu'à partir du moment où une partie de l'IES a été supprimée, cela permet d'augmenter la fiabilité des données décidées.

Le blanchiment du signal z(n) est obtenu en minimisant sa variance $E\{|z(n)|^2\}$ par une technique de "gradient stochastique" (algorithme SGLMS). On sait en effet que la solution optimale au sens de Wiener est celle qui rend l'erreur de prédiction z(n) orthogonale aux différentes composantes du vecteur Z(n). Dans ces conditions les échantillons z(n) sont non corrélés sur un horizon fini de durée N.

L'équation d'actualisation du vecteur C est alors la suivante :

$$C(n) = C(n-1) + \mu_c \, z(n) \, [z(n-1)...z(n-N)]^H \qquad (I-9)$$

l'exposant H désignant l'opération de transposition et de conjugaison.

Pour l'actualisation du vecteur B, un certain nombre de fonctions coûts et notamment celle de Godard (Constant Modulus Algorithm) ont été essayées. Egalement, les inventeurs se sont intéressés à des stratégies mixtes associant la fonction de Godard à une stratégie de type Benveniste-Goursat. Ils ont par ailleurs examiné ces différents critères sur un certain nombre de canaux dont ceux de Porat et Friedlander [11] et de Macchi [13].

La technique itérative mise en oeuvre est celle du "gradient stochastique" (elle pourrait être également celle des moindres carrés récursifs). Les différents signaux d'erreur correspondant aux stratégies citées précédemment ont pour expression :

$$e_{God}(n) = y(n)[1-|y(n)|^2] \qquad \text{Godard [6]} \qquad (I-10)$$

$$e_{sw}(n) = -y(n)|y(n)|^2 \qquad \text{Shalvi-Wenstein [10]} \qquad (I-11)$$

$$e_{DD}(n) = [\hat{d}(n)exp(j\hat{\theta}(n-1))-y(n)] \text{ LMS}$$

$$\text{(Decision Directed)} \qquad (I-12)$$

$$e_{Benv}(n) = k_1\ e_{DD}(n) + k_2\ e_{God}(n)|e_{DD}(n)|$$

Benveniste-Godard (I-13)

Selon le critère retenu, c'est-à-dire la fonction coût $e_x(n)$, l'équation d'actualisation du vecteur B s'écrit :

$$B(n) = B(n-1) + \mu_B\ e_x(n)\ Z^*(n) \tag{I-14}$$

On remarquera que selon le critère retenu l'algorithme est sensiblement autodidacte. Les critères qui sont apparus les plus rapides sur l'ensemble des simulations sont ceux de Godard, éventuellement associés aux stratégies de Benveniste qui permettent le basculement en douceur d'un critère autodidacte (Godard) à un critère final (poursuite) de type LMS piloté par décision (Decision Directed).

Plus précisément, l'actualisation de B est démarré sur un critère de Godard puis on bascule sur une stratégie de type Benveniste lorsque la variance de z(n), estimée au sens des moindres carrés, atteint un seuil donné. Le facteur d'oubli typique pour cette estimation a été fixé à $\lambda = 0.99$.

Par ailleurs, le vecteur initial B(O) a été arbitrairement fixé à $B(0) = [0\ 0...\ 1]^T$. La position et la valeur initiales du coefficient de référence peuvent bien entendu être modifiées. En d'autres termes, le filtre linéaire transverse peut ne pas être exclusivement anticausal.

Le retard de restitution $\delta$ sera, de toute façon, égal à la dimension de la partie anticausale du filtre transverse 12.

*. phase de poursuite/périodes de réception faciles*

Cette phase commence lorsque l'erreur quadratique moyenne estimée (EQM) au sens des moindres carrés récursifs (Recursive Least Square) descend au dessous d'un certain seuil fixé, par exemple, à 0.2 pour une modulation MDP4. L'équation d'actualisation de l'EQM estimée est alors la suivante :

$$EQM(n) = \lambda EQM(n-1)+(1-\lambda)\ |\hat{d}(n)\exp(j\ \hat{\theta}(n-1))-y(n)|^2 \tag{II-0}$$

$$EQM(0) = 1$$

Dans ce cas, on permute le prédicteur 11 et le filtre transverse 12 linéaire et de plus on passe alors en mode DFE, c'est-à-dire que l'on remplace y(n) par la donnée décidée préalablement corrigée en phase soit $\hat{d}(n)\exp(j\ \hat{\theta}(n-1))$ dans la partie arrière.

L'égaliseur passe donc globalement d'une structure récursive linéaire à une structure récursive non linéaire (DFE).

En outre, on modifie les fonctions coûts et on actualise B et C selon le critère de minimisation de l'EQM (algorithme SGLMS piloté par décision). Cette modification est évidemment réversible, tant au niveau de la structure qu'au niveau des fonctions coûts.

Parallèlement à cette double action, il est également possible de bloquer le gain réel g(n) à sa valeur précédente, le filtre transverse 12 étant alors traité comme un égaliseur transverse linéaire classique capable, à ce titre, de prendre à sa charge l'adaptation du contrôle automatique de gain. Autrement dit, la structure finale est alors parfaitement équivalente à celle d'un DFE (Decision Feedback Equalizer), avec l'avantage de pouvoir revenir simplement à une structure complètement aveugle récursive et linéaire lorsque l'EQM estimée dépasse le seuil critique.

Les équations d'actualisation de l'algorithme sont les suivantes :

$$t(n) = x(n)\ g(n-1) \tag{II-1}$$

$$p(n) = B^T\ (n-1)\ T(n)\ \text{avec}\ T(n)=[t(n)...t(n-L)]^T \tag{II-2}$$

$$y(n) = p(n)-C^T(n-1) \, Y(n) \qquad\qquad\text{(II-3)}$$

$$Y(n)=[\hat{d}(n-1)exp(j\hat{\theta}(n-2))...\hat{d}(n-N)exp(j\hat{\theta}(n-N-1))]^T -$$

$$w(n)=y(n)exp(-j\hat{\theta}(n-1)) \qquad\qquad\text{(II-4)}$$

Parallèlement, il est nécessaire de déterminer les expressions suivantes :

$$z(n) = t(n)-[z(n-1)... \, z(n-N)]C(n-1) \qquad\qquad\text{(II-5)}$$

$$Z(n) = [z(n) \, z(n-1) \, ... \, z(n-L)]^T \qquad\qquad\text{(II-6)}$$

L'actualisation du gain réel g peut se faire selon le critère utilisé en phase de convergence ou alors ce gain peut être intégré dans l'actualisation du vecteur B. L'actualisation de l'erreur de phase se fait quant à elle selon la même stratégie que dans la phase initiale.

Les équations d'actualisation des vecteurs B et C sont celles d'un algorithme LMS classique piloté par décision à savoir :

$$B(n) = B(n-1) + \mu_B[\hat{d}(n)exp(j\hat{\theta}(n-1))-y(n)]T^*(n) \qquad\qquad\text{(II-7-a)}$$

correspondant à l'interrupteur en position a (Decision Feedback Equalizer).

$$B(n) = B(n-1) + \mu_B[\hat{d}(n)exp(j\hat{\theta}(n-1))-y(n)]Z^*(n) \qquad\qquad\text{(II-7-b)}$$

correspondant à l'interrupteur en position b.

$$C(n) = C(n-1) - \mu_C[\hat{d}(n)exp(j\hat{\theta}(n-1))-y(n)]Y^*(n) \qquad\qquad\text{(II-8)}$$

Enfin, en phase de poursuite, le CAG 10 peut être intégré dans l'égaliseur transverse linéaire, il suffit dans ce cas de bloquer le paramètre g à sa valeur précédente, ceci est surtout intéressant sur les canaux stationnaires. Dans ces conditions, on retombe alors clairement sur une structure de type DFE dont on connaît les performances. Mieux, lorsque le nombre d'erreurs de décision atteint un seuil critique, le DFE classique peut diverger du fait du phénomène de propagation des erreurs de décision. A contrario, avec la nouvelle stratégie et dans un contexte sévère, l'erreur quadratique moyenne estimée dépasse alors le seuil critique tant et si bien que le dispositif subit une modification de structure permettant de repasser en mode autodidacte. Il n'y a plus a priori de risque majeur de divergence dû au phénomène de propagation d'erreurs. C'est un point remarquable.

Enfin le retard de restitution est toujours égal à la longueur L, de la partie anticausale de l'égaliseur transverse linéaire et se trouve, à ce titre, fixé par la position initiale du coefficient de référence. Ceci a été vérifié sur un certain nombre de canaux mixtes sévères.

PERFORMANCES

Le dispositif précédemment décrit, objet de l'invention, et les algorithmes associés ont été testés avec succès sur des signaux réels de communications acoustiques sous-marines, dans des contextes particulièrement réverbérants (bassin d'essais et transmissions horizontales faibles fonds en mer).

Parallèlement le fonctionnement du dispositif et des algorithmes associés a été simulé pour des modulations de type MDP4 (QPSK) sur les canaux de Macchi et de Porat Friedlander. Dans chaque cas, la variance des données est normalisée à 1. Le rapport signal à bruit a été fixé à 15 dB, la dimension N du prédicteur 11 étant choisie égale à 5,L étant fixé à 19, ce qui entraîne une dimension de l'égaliseur transverse linéaire égale à 20.

Il a été simulé, pour chaque épreuve, un décalage en fréquence aléatoire $\Delta F$ tel que le produit $\Delta FxT$ soit

uniformément réparti dans l'intervalle [0,0.002], T désignant classiquement la durée d'un symbole. Parallèlement nous avons également introduit, pour chaque épreuve, une erreur de phase initiale uniformément répartie sur [0,2π].

*. canal de PORAT et FRIEDLANDER*

Ce canal a des zéros de part et d'autre du cercle unité, sa réponse impulsionnelle discrète est la suivante :

$$f=[2-0.4*j\ 1.5+1.8j\ 1\ 1.2-1.3*j\ 0.8+1.6*j]$$

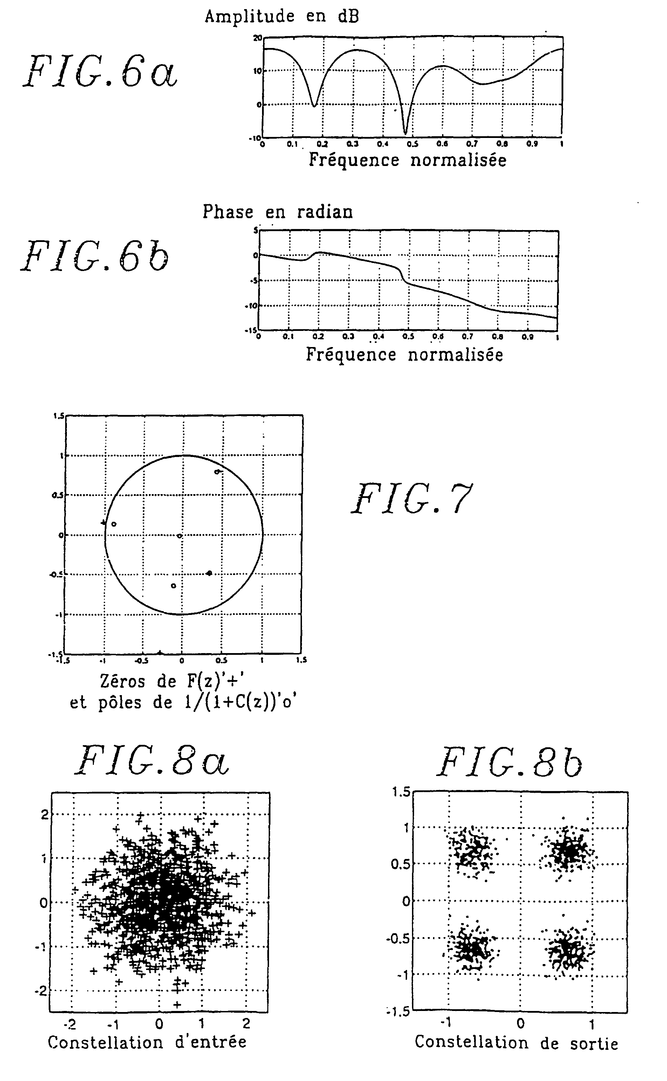

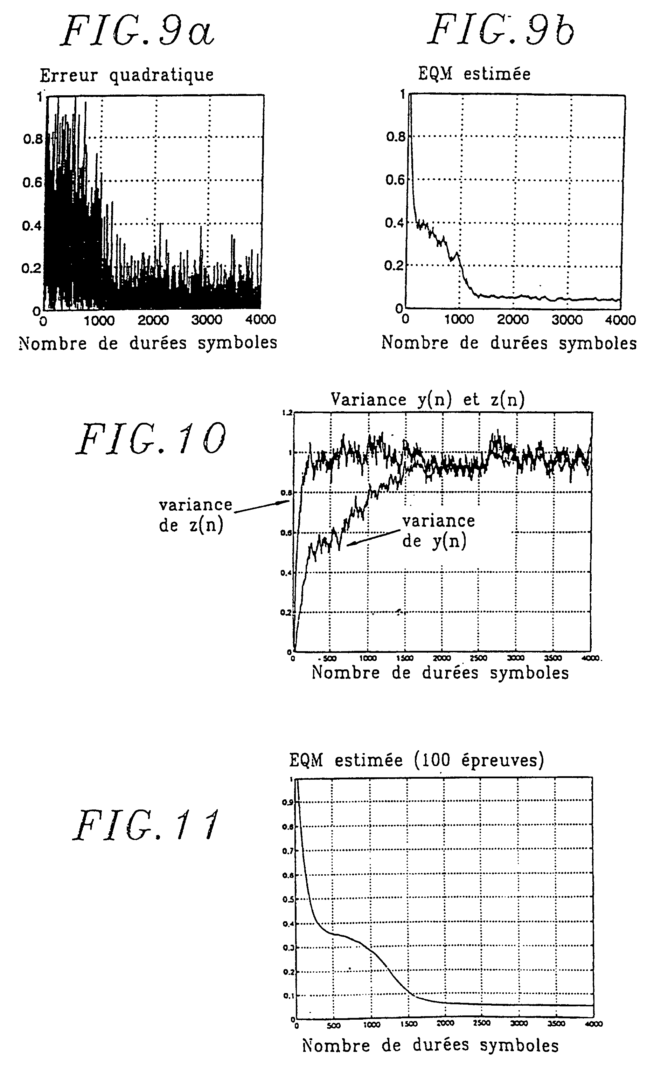

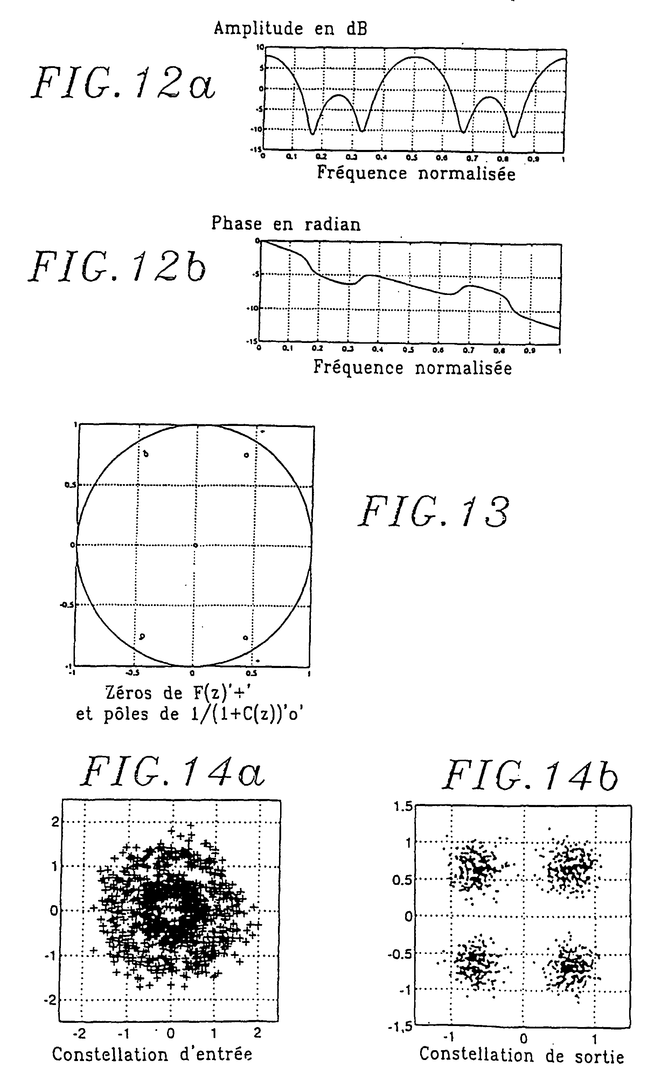

On remarquera que cette réponse impulsionnelle est complexe, contrairement à celle utilisée dans l'exemple suivant. On a représenté (figures 6a et 6b) la réponse fréquentielle de ce canal, en phase et en amplitude ainsi que la position des zéros de la fonction de transfert vis à vis du cercle unité (figure 7).
Puis, on a examiné sur un tirage particulier la position finale des pôles de la fonction de transfert du prédicteur (11) 1/(1+C(z)). On notera notamment (et conformément à la théorie) la présence de 2 pôles intérieurs symétriques des 2 zéros extérieurs de la fonction de transfert F(z) du canal de transmission (canal de type mixte).
Sur les figures 8a et 8b apparaissent la constellation de départ ainsi que celle du signal w(n) sur les 1000 dernières valeurs.
De plus, toujours dans le cas d'un fichier particulier, les figures 9a et 9b montrent l'évolution de l'erreur quadratique instantanée et celle de l'EQM estimée au sens des moindres carrés (RLS). On constate que la convergence se situe aux environs de 1000 itérations, point tout à fait remarquable, ce qui est beaucoup plus rapide que dans les dispositifs de l'art antérieur.
L'évolution de la variance estimée au sens RLS de y(n) et de z(n) sont données sur la figure 10. On constate là encore que la convergence intervient aux environs de 1000 itérations.
Enfin, on donne sur la figure 11 l'évolution de l'EQM estimée. Cette estimation est obtenue en procédant à 100 tirages aléatoires et en effectuant la moyenne arithmétique des erreurs quadratiques moyennes estimées au sens des moindres carrés récursifs (RLS). Ce résultat permet de vérifier la puissance du nouveau dispositif et des algorithmes associés.
On voit notamment que, dans le cas d'une modulation de type MDP4, le temps de convergence est de l'ordre de 1000 durées symbole pour des algorithmes de type "gradient stochastique". A titre de comparaison, un égaliseur transverse linéaire autodidacte tel que celui introduit par Godard nécessite typiquement quinze mille durées symbole et accuse une augmentation de l'erreur quadratique moyenne de l'ordre de 3.5 dB.

*. canal de MACCHI*

Ce canal a des zéros de part et d'autre du cercle unité, sa réponse impulsionnelle discrète est la suivante :

$$f = [0.8264\ 0.1653\ 0.8512\ 0.1636\ 0.81]$$

Sur la figure 12, on a représenté la réponse fréquentielle de ce canal, en phase et en amplitude ainsi que la position des zéros de la fonction de transfert vis à vis du cercle unité.
Sur un lancement particulier, on a examiné la position finale des pôles de la fonction de transfert 1/(1+C(z)) du prédicteur 11. On notera notamment (et conformément à la théorie) la présence de 2 pôles intérieurs symétriques des 2 zéros extérieurs de la fonction de transfert F(z) du canal de transmission.

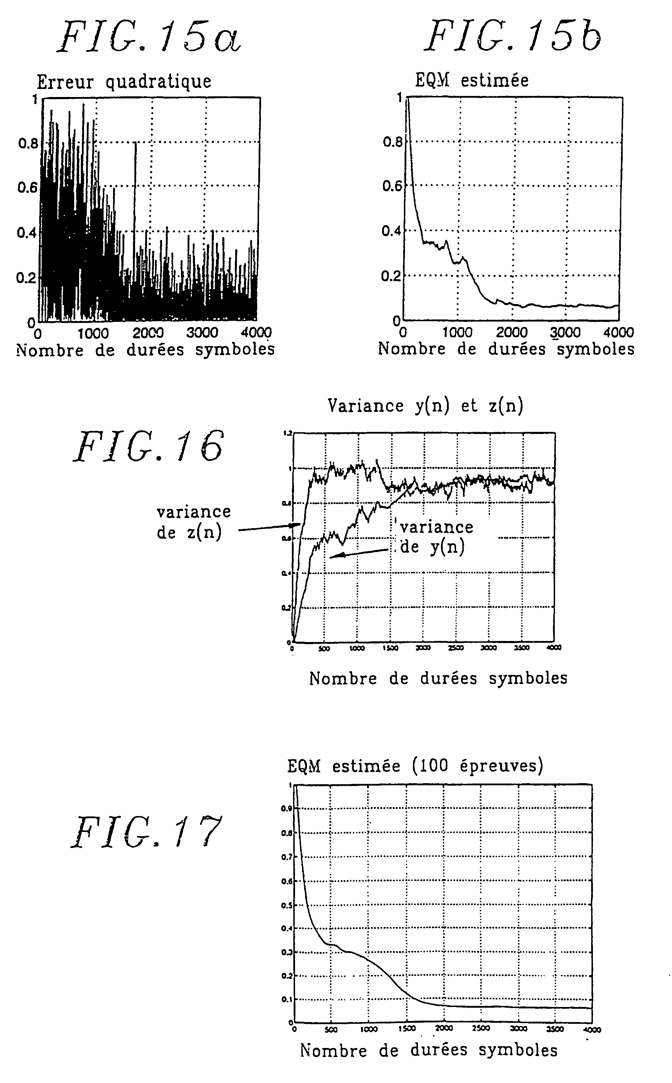

Sur la figure 14 apparaissent la constellation de départ ainsi que celle du signal w(n) sur les 1000 dernières valeurs. L'interférence entre symboles a été substantiellement réduite par notre dispositif.
De plus, toujours dans le cas d'un fichier particulier, la figure 15 montre l'évolution de l'erreur quadratique instantanée et celle de l'EQM estimée au sens des moindres carrés (RLS), ce qui permet de constater là encore que la convergence se situe aux environs de 1000 itérations.
Parallèlement, la figure 16 donne l'évolution de la variance estimée de y(n) et de z(n). Cette estimation se fait au sens des moindres carrés récursifs (RLS), avec un facteur d'oubli de 0.99.
Enfin, la figure 17 donne l'évolution de l'EQM obtenue en procédant à 100 tirages. Ce résultat permet de corroborer la puissance du nouvel algorithme sur ce nouveau canal.

APPLICATIONS

Les domaines couverts par cette invention sont naturellement les télécommunications hertziennes, radiomobiles et acoustiques sous-marines où classiquement les égaliseurs non linéaires à retour de décision (DFE) sont particulièrement utilisés à l'heure actuelle. Ces canaux présentent tous la spécificité d'être fortement non stationnaires et affichent en général des réponses impulsionnelles longues. Par ailleurs, les communications par câbles peuvent également tirer profit de cette nouvelle invention, ils sont en effet généralement caractérisés par des réponses impulsionnelles couvrant plusieurs durées symboles et se prêtent donc assez mal à l'emploi de récepteurs optimaux.

Les types de modulation concernées par cette invention sont essentiellement les modulations linéaires telles que les modulations à 2 et 4 états de phase (MDP2, MDP4), les modulations d'amplitude (MA) et les modulations d'amplitude selon deux porteuses en quadrature (MAQ), modulations très largement utilisées dans les applications actuelles.

Le domaine de validité de cette invention s'étend également aux récepteurs utilisant les techniques de diversité spatiale ou fréquentielle pour lesquels la structure optimale, au sens de la minimisation de l'erreur quadratique moyenne, est constituée, sur chaque voie, d'un filtre transverse 12 linéaire (au pas T) et d'un filtre récursif.

En outre cette structure peut être étendue aux égaliseurs de type fractionné ("fractionally spaced equalizer" selon la terminologie anglo-saxonne), c'est-à-dire aux égaliseurs utilisant plus d'un échantillon par durée symbole, par opposition aux égaliseurs dits "synchrones" ("T spaced equalizer" selon la terminologie anglo-saxonne). Ces dispositifs fractionnés apportent généralement un gain en terme de performances essentiellement lié au fait qu'ils affichent une relative insensibilité au choix de l'instant d'échantillonnage, ce qui n'est absolument pas le cas des égaliseurs synchrones.

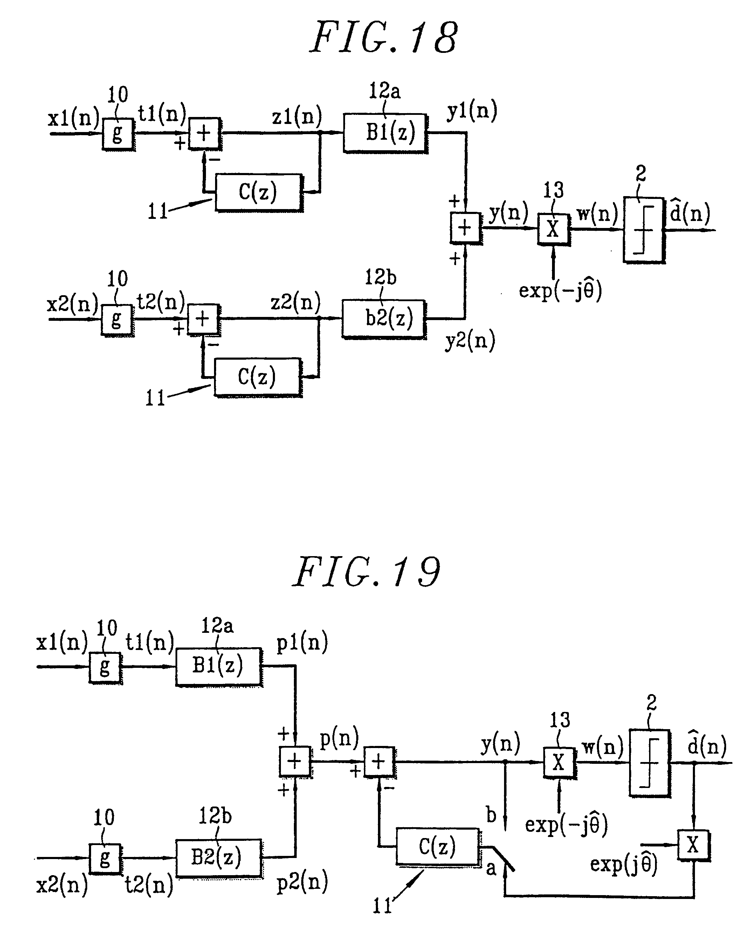

Un exemple de réalisation possible d'égaliseur fractionné est illustré sur les figures 18 et 19. En période de convergence ou de réception difficile la structure du dispositif est conforme à la figure 18. Les signaux entrelacés notés respectivement x1(n) et x2(n) ont pour expression :

$$x1(n) = x(nT+\tau)$$

$$x2(n) = x(nT+\tau-\Delta)$$

avec, par exemple et de façon tout à fait classique, $\Delta = T/2$, $\tau$ désignant la phase d'échantillonnage (sampling phase).

Le prédicteur purement récursif 11 de fonction de transfert 1/(1+C(z)) est commun aux deux voies sur lesquelles entrent les signaux x1(n) et x2(n) et est optimisé pour blanchir la sortie z1(n). Le CAG 10 est actualisé pour adapter la puissance moyenne du signal z1(n) en sortie du prédicteur 11 à son niveau nominal. Les filtres linéaires transverses ont été référencés par 12a-12b. Ils sont distincts pour chacun des deux signaux-et sont caractérisés par leurs fonctions de transfert respectives B1(z) et B2(z). Elles constituent l'égaliseur de phase et peuvent être adaptés par l'un des algorithmes décrits précédemment. Il suffit pour cela de remarquer que le signal y(n) peut encore s'écrire :

$$y(n) = B^T (n-1) Z(n)$$

$$B^T = [B1^T \, B2^T]$$

$$Z(n)^T = [Z1(n)^T \, Z2(n)^T]$$

$$Z1(n) = [z1(n) \, z1(n-1) \, ... \, z1(n-L)]^T$$

$$Z2(n) = [z2(n) \, z2(n-1) \, ... \, z2(n-L)]^T$$

$$B1 = [b_{0,1} \, ... \, b_{L-1,1} \, b_{L,1}]$$

$$B2 = [b_{0,2} \, ... \, b_{L-1,2} \, b_{L,2}]$$

Comme dans le dispositif précédent, dès que, par exemple, l'erreur quadratique moyenne estimée au sens des moindres carrés descend au dessous d'un certain seuil, la structure du dispositif est alors modifiée conformément à la figure 19. Parallèlement le critère d'optimalité pour l'adaptation des différents paramètres devient alors la minimisation de l'erreur quadratique moyenne. Les équations qui en découlent sont parfaitement similaires à celles décrites précédemment.

Par ailleurs, la place du gain g et du dispositif de récupération de porteuse peuvent être situés comme précédemment en d'autres points de la chaîne.

Enfin et d'un point de vue général, les algorithmes précédemment décrits associés au dispositif objet de l'invention, utilisent une technique itérative de type "gradient stochastique". Bien entendu, une autre approche et notamment celle "des moindres carrés récursifs" (Recursive Least Square) avec facteur d'oubli peut être envisagée pour accélérer le processus de convergence et pour mieux suivre les fluctuations rapides du canal de transmission, ceci au prix d'un accroissement de la complexité calculatoire.

Egalement, les moyens d'évaluation de performances peuvent calculer une erreur quadratique moyenne entre l'entrée et la sortie du circuit de décision 2 ou encore, par exemple, le Kurtosis du signal d'entrée du circuit de décision 2. Ce dernier rend effectivement compte du degré de déconvolution du canal ou de manière équivalente, de l'état d'avancement du processus d'égalisation.

Par ailleurs, la place des moyens 13 permettant de corriger l'erreur de phase peut être bien entendu différente de celle des variantes précédemment décrites.

En particulier, en variante à la structure illustrée sur la figure 5, les places des moyens de correction de phase 13 et du filtre 12 peuvent être inversées, les équations relatives à cette structure se déduisent simplement de celles précédemment exposées.

Cette modification structurelle permet par ailleurs d'économiser une multiplication complexe car le filtre arrière C(z) est alors directement alimenté par les données décidées ^d(n) en lieu et place de ^d(n)exp(j^θ(n-1)).

Egalement encore, on peut imaginer une stratégie différente pour déclencher le changement structurel et algorithmique. On peut en effet utiliser deux seuils, $J_1 \leq J_0$ et décréter que le passage de la phase 1 (convergence) à la phase 2 se fait si et seulement si $EQM(n) \leq J_1$, tandis que le basculement de la phase 2 à la phase 1 ne se fait que si et seulement si $EQM(n) \geq J_0$. Cela permet notamment de supprimer des basculements à répétitions dans certains cas délicats.

On pourrait enfin imaginer un dispositif plus complexe dans lequel on garderait en parallèle et de façon permanente un dispositif correspondant à la structure de la phase initiale dite "de convergence" qui prendrait alors plus rapidement le relai pour le cas où le dispositif viendrait à basculer du mode de poursuite (phase 2) au mode de convergence (phase 1) par suite de mauvaises conditions de transmission.

**Revendications**

1. Dispositif d'égalisation pour récepteur de système de communication numérique comportant des moyens (10) de contrôle automatique de gain, des moyens (13) de récupération de porteuse, des moyens (12) pour l'égalisation en phase des données, ainsi qu'un prédicteur (11) pour l'égalisation en amplitude des données, un circuit de décision (2), **caractérisé en ce que** le prédicteur (11) est purement récursif, l'égaliseur de phase (12) est purement transverse et la place relative de ces deux éléments est commutable, des moyens permettant d'évaluer des performances en termes d'erreur de décision et de commander la commutation entre les deux éléments selon un critère d'appréciation de la difficulté de réception, le prédicteur étant amont et optimisé de manière adaptative et autodidacte pour blanchir sa propre sortie tandis que l'égaliseur de phase (12) est aval et optimisé de manière adaptative dans les périodes de réception difficile, alors que le prédicteur (11) est aval et l'égaliseur de phase (12) est amont, tous deux étant conjointement optimisés de manière adaptative pour minimiser l'erreur de décision entre la sortie ( d(n)) du circuit de décision (2) et son entrée (w(n) ou y(n)) dans les périodes de réception facile.

2. Dispositif selon la revendication 1, **caractérisé en ce que** le prédicteur (11) est alimenté soit par les données estimées ( d(n)) obtenues en sortie du circuit de décision (2) et corrigées en phase (exp(jθ)), soit par les données (y(n)) en sortie du prédicteur (11), le dispositif comportant des moyens (a,b) pour basculer de l'une à l'autre de ces alimentations selon un critère d'appréciation de la vraisemblance des données estimées en sortie du circuit de décision (2).

3. Dispositif selon l'une des revendications 1 ou 2, **caractérisé en ce que** les moyens d'évaluation des performances en termes d'erreur de décision calculent une erreur quadratique moyenne entre les données estimées (d(n)) en sortie du circuit de décision (2) et les données (w(n)) à son entrée.

4. Dispositif selon l'une des revendications 1 ou 2, **caractérisé en ce que** les moyens d'évaluation des performances en terme d'erreur de décision calculent le kurtosis du signal d'entrée du circuit de décision.

5. Dispositif selon l'une des revendications 1 à 3, **caractérisé en ce que**, dans les périodes de réception facile, le contrôle automatique de gain (10) est maintenu à un niveau constant, l'adaptation du gain étant réalisée par l'égaliseur de phase (12).

6. Dispositif selon l'une quelconque des revendications précédentes, **caractérisé en ce que** le prédicteur (11) met en oeuvre une optimisation itérative par gradient stochastique ou par la technique des moindres carrés récursifs (RLS).

7. Dispositif selon l'une quelconque des revendications 1 à 6, **caractérisé en ce que** le contrôle automatique de gain (10) est situé en amont du prédicteur (11) et de l'égaliseur de phase (12).

8. Dispositif selon l'une quelconque des revendications 1 à 7, **caractérisé en ce que** les moyens de récupération de la porteuse (13) sont situés en aval du filtre transverse (12) et du prédicteur purement récursif (11).

9. Egaliseur fractionné destiné à traiter plus d'un échantillon par durée symbole, **caractérisé en ce qu'**il est constitué par un dispositif d'égalisation selon l'une des revendications précédentes, ce dispositif comportant un prédicteur (11) commun aux signaux entrelacés et un égaliseur de phase distinct (12a, 12b) pour chacun de ces signaux.

10. Dispositif d'égalisation pour récepteur de système de télécommunications hertziennes, radiomobiles ou acoustiques sous-marines ou de télécommunications par câbles, **caractérisé en ce qu'**il est constitué par le dispositif selon l'une des revendications 1 à 9.

11. Dispositif d'égalisation pour récepteur de signaux de communication numérique utilisant des modulations monoporteuses ou multiporteuses, **caractérisé en ce qu'**il est constitué par le dispositif selon l'une des revendications 1 à 9.

12. Procédé d'égalisation pour récepteur de système de communication numérique avec des moyens (10) de contrôle automatique de gain, des moyens (13) de récupération de porteuse, des moyens (12) pour l'égalisation en phase des données, et un prédicteur (11) pour l'égalisation en amplitude des données, caractéristé en ce que le prédicteur (11) est purement récursif, l'égalisateur de phase (12) est purement transverse et la place relative de ces deux éléments est commutable, et en ce qu'on évalue les performances en terme d'erreur de décision et on commande la commutation entre les deux éléments selon un critère d'appréciation de la difficulté de réception, le prédicteur étant amont et optimisé de manière adaptative et autodidacte pour blanchir sa propre sortie tandis que l'égaliseur de phase (12) est aval et optimisé de manière adaptative dans les périodes de réception difficile, alors que le prédicteur (11) est aval et l'égaliseur de phase (12) est amont, tous deux étant conjointement optimisés de manière adaptative pour minimiser l'erreur de décision entre la sortie (^d(n)) du circuit de décision (2) et son entrée (w(n) ou y(n)) dans les périodes de réception facile.

## Claims

1. An equalizer circuit for a digital communications system, the circuit including automatic gain control means (10), carrier recovery means (13), data phase equalization means (12), and a predictor (11) for data amplitude equalization, together with a decision circuit (2), and being **characterized in that** the predictor (11) is purely recursive, the phase equalizer (12) is purely transversal, and the relative positions of those two elements are interchangeable, means for evaluating performance in terms of decision error and for causing the two elements to be interchanged in application of a criterion for evaluating the difficulty of reception, the predictor being upstream and optimized in adaptive and self-leaming manner to whiten its own output while the phase equalizer (12) is downstream and optimized in adaptive manner during periods of difficult reception, whereas the predictor (11) is downstream and the phase equalizer (12) is upstream, both being optimized jointly in adaptive manner to minimize decision error between the output ($\hat{d}(n)$) of the decision circuit (2) and its input (w(n) or y(n)) during periods of easy reception.

2. A circuit according to claim 1, **characterized in that** the predictor (11) is fed either with estimated data ($\hat{d}(n)$) obtained at the output from the decision circuit (2) and phase corrected (exp(jθ)), or else by data (y(n)) from the output of the predictor (11), the circuit including means (a, b) for switching between said two feeds as a function of a criterion for evaluating the likelihood of the estimated data at the output from the decision circuit (2).

3.  A circuit according to claim 1 or 2, **characterized in that** the means for evaluating performance in terms of decision error compute an MSE between the estimated data (d(n)) at the output of the decision circuit (2) and the data (w (n)) at its input.

4.  A circuit according to claim 1 or 2, **characterized in that** the means for evaluating performance in terms of decision error compute the kurtosis of the input signal of the decision circuit.

5.  A circuit according to any one of claims 1 to 3, **characterized in that** during periods of easy reception, automatic gain control (10) is kept at a constant level, with adaptation of gain being performed by the phase equalizer (12).

6.  A circuit according to any preceding claim, **characterized in that** the predictor (11) performs iterative optimization by stochastic gradient or by the recursive least squares (RLS) technique.

7.  A circuit according to any one of claims 1 to 6, **characterized in that** automatic gain control (12) is situated upstream from the predictor (11) and the phase equalizer (12).

8.  A circuit according to any one of claims 1 to 7, **characterized in that** the carrier recovery means (13) are situated downstream from the transversal filter (12) and from the purely recursive predictor (11).

9.  A fractionally-spaced equalizer for processing more than one sample per symbol time, **characterized in that** it is constituted by an equalizer circuit according to any preceding claim, the circuit having a predictor (11) common to the interleaved signals and distinct phase equalizers (12a, 12b) for each of said signals.

10. An equalizer circuit for a receiver in radiotelecommunications, in mobile radio, or in submarine acoustic telecommunications, or in cable telecommunications, the circuit being **characterized in that** it is constituted by the circuit according to any one of claims 1 to 9.

11. An equalizer circuit for a receiver for receiving digital communications signals using single or multicarrier modulation, the circuit being **characterized in that** it is constituted by the device according to any one of claims 1 to 9.

12. An equalizing method for a receiver of a digital communications system having automatic gain control means (10), carrier recovery means (13), means (12) for data phase equalization, and a predictor (11) for data amplitude equalization, the method being **characterized in that** the predictor (11) is purely recursive, the phase equalizer (12) is purely transversal, and the relative positions of those two elements are interchangeable, and **in that** performance is evaluated in terms of decision error and the two elements are interchanged in application of a criterion for evaluating the difficulty of reception, the predictor being upstream and optimized in adaptive and self-learning manner to whiten its own output while the phase equalizer (12) is downstream and optimized in adaptive manner during periods of difficult reception, whereas the predictor (11) is downstream and the phase equalizer (12) is upstream, both being optimized jointly in adaptive manner to minimize decision error between the output (d(n)) of the decision circuit (2) and its input (w(n) or y(n)) during periods of easy reception.


**Patentansprüche**

1.  Entzerrvorrichtung für Digitalkommunikationssystemempfänger, welche folgendes umfaßt: Mittel (10) zur automatischen Steuerung der Verstärkung, Mittel (13) zur Trägerfrequenzwiedergewinnung, Mittel (12) zur Phasenentzerrung von Daten, sowie einen Prädiktor (11) zur Amplitudenentzerrung von Daten, eine Entscheidungsschaltung (2), **dadurch gekennzeichnet, daß** der Prädiktor (11) rein rekursiv ist, der Phasenentzerrer (12) rein transversal und die relative Anordnung der beiden Elemente umschaltbar ist, wobei Mittel es ermöglichen, Leistungsdaten anhand eines Entscheidungsfehlers zu bewerten und die Umschaltung zwischen den beiden Elementen entsprechend einem Bewertungskriterium für die Empfangsschwierigkeit zu steuern, wobei der Prädiktor stromaufwärts liegt und auf adaptive und selbstlernende Weise optimiert wird, um seinen eigenen Ausgang zu bleichen, solange der Phasenentzerrer (12) stromabwärts liegt und auf adaptive Weise in den Zeitperioden schwierigen Empfangs optimiert wird, während der Prädiktor (11) stromabwärts liegt und der Phasenentzerrer (12) stromaufwärts liegt, beide gemeinsam auf adaptive Weise optimiert werden, um den Entscheidungsfehler zwischen dem Ausgang (d(n)) der Entscheidungsschaltung (2) und deren Eingang (w(n) oder y(n)) in den Zeitperioden schwachen Empfangs zu minimieren.

**2.** Vorrichtung nach Anspruch 1, **dadurch gekennzeichnet, daß** der Prädiktor (11) entweder mit den geschätzten Daten (d($n$)), die am Ausgang der Entscheidungsschaltung (2) erhalten werden und in der Phase (exp($j\theta$)) korrigiert sind, oder mit den Daten (y(n)) am Ausgang des Prädiktors (11) versorgt wird, wobei die Vorrichtung Mittel (a, b) zum Hin- und Herschalten zwischen dem einen und dem anderen dieser. Versorgungen gemäß einem Bewertungskriterium für die Richtigkeit der geschätzten Daten am Ausgang der Entscheidungsschaltung (2) aufweist.

**3.** Vorrichtung nach einem der Ansprüche 1 oder 2, **dadurch gekennzeichnet, daß** die Mittel zur Bewertung von Leistungsdaten anhand eines Entscheidungsfehlers einen mittleren quadratischen Fehler zwischen den geschätzten Daten (d($n$)) am Ausgang der Entscheidungsschaltung (2) und den Daten (w(n)) an deren Eingang berechnen.

**4.** Vorrichtung nach einem der Ansprüche 1 oder 2, **dadurch gekennzeichnet, daß** die Mittel zur Bewertung von Leistungsdaten anhand eines Entscheidungsfehlers den Exzess des Signals am Eingang der Entscheidungsschaltung berechnen.

**5.** Vorrichtung nach einem der Ansprüche 1 bis 3, **dadurch gekennzeichnet, daß** in den Zeitperioden schwachen Empfangs die automatische Steuerung der Verstärkung (10) auf einem konstanten Pegel gehalten wird, wobei die Anpassung der Verstärkung durch den Phasenentzerrer (12) bewirkt wird.

**6.** Vorrichtung nach einem der vorhergehenden Ansprüche, **dadurch gekennzeichnet, daß** der Prädiktor (11) eine iterative Optimierung mit stochastischem Gradienten oder mit dem Verfahren rekursiver kleinster Quadrate (RLS) anwendet.

**7.** Vorrichtung nach einem der Ansprüche 1 bis 6, **dadurch gekennzeichnet, daß** die automatische Steuerung der Verstärkung (10) stromaufwärts des Prädiktors (11) und des Phasenentzerrers (12) liegt.

**8.** Vorrichtung nach einem der Ansprüche 1 bis 7, **dadurch gekennzeichnet, daß** die Mittel zur Wiedergewinnung der Trägerfrequenz (13) stromabwärts des Transversalfilters (12) und des rein rekursiven Prädiktors (11) liegen.

**9.** Teilentzerrer, der dazu bestimmt ist, mehr als einen Abtastwert pro Symboldauer zu bearbeiten, **dadurch gekennzeichnet, daß** er durch eine Entzerrvorrichtung gemäß einem der vorhergehenden Ansprüche gebildet ist, wobei diese Vorrichtung einen den verschachtelten Signalen gemeinen Prädiktor (11) und einen separaten Phasenentzerrer (12a, 12b) für jedes dieser Signale aufweist.

**10.** Entzerrvorrichtung für Richtfunk-, Mobilfunk- oder akustische Unterwasser-Nachrichtenübertragungssystemempfänger oder Kabelnachrichtenübertragungssystemempfänger, **dadurch gekennzeichnet, daß** sie durch die Vorrichtung nach einem der Ansprüche 1 bis 9 gebildet ist.

**11.** Entzerrvorrichtung für Digitalkommunikationssignalempfänger, welche Einfach-Träger- oder Vielfach-Träger-Frequenzmodulationen anwendet, **dadurch gekennzeichnet, daß** sie durch die Vorrichtung nach einem der Ansprüche 1 bis 9 gebildet ist.

**12.** Entzerrverfahren für Digitalkommunikationssystemempfänger mit Mitteln (10) zur automatischen Steuerung der Verstärkung, Mitteln (13) zur Trägerfrequenzwiedergewinnung, Mitteln (12) zur Phasenentzerrung von Daten, und einen Prädiktor (11) zur Amplitudenentzerrung von Daten, **dadurch gekennzeichnet, daß** der Prädiktor (11) rein rekursiv ist, der Phasenentzerrer (12) rein transversal ist und die relative Anordnung dieser beiden Elemente umschaltbar ist, und daß die Leistungsdaten anhand eines Entscheidungsfehlers bewertet werden und die Umschaltung der beiden Elemente entsprechend einem Bewertungskriterium für die Empfangsschwierigkeit gesteuert wird, wobei der Prädiktor stromaufwärts liegt und auf adaptive und selbstlernende Weise optimiert wird, um seinen eigenen Ausgang zu bleichen, solange der Phasenentzerrer (12) stromabwärts liegt und auf adaptive Weise in den Zeitperioden schwierigen Empfangs optimiert wird, während der Prädiktor (11) stromabwärts liegt und der Phasenentzerrer (12) stromaufwärts liegt, und beide gemeinsam auf adaptive Weise optimiert werden, um den Entscheidungsfehler zwischen dem Ausgang (d($n$)) der Entscheidungsschaltung (2) und deren Eingang (w(n)oder y(n)) während den Zeitperioden schwachen Empfangs zu minimieren.

FIG.1

FIG.2

FIG.3

FIG.4

FIG.5

**FIG.6a**

Amplitude en dB

Fréquence normalisée

**FIG.6b**

Phase en radian

Fréquence normalisée

**FIG.7**

Zéros de F(z) '+'
et pôles de 1/(1+C(z)) 'o'

**FIG.8a**

Constellation d'entrée

**FIG.8b**

Constellation de sortie

# FIG.9a

Erreur quadratique

Nombre de durées symboles

# FIG.9b

EQM estimée

Nombre de durées symboles

# FIG.10

Variance y(n) et z(n)

variance de z(n)

variance de y(n)

Nombre de durées symboles

# FIG.11

EQM estimée (100 épreuves)

Nombre de durées symboles

Amplitude en dB

*FIG.12a*

Fréquence normalisée

Phase en radian

*FIG.12b*

Fréquence normalisée

*FIG.13*

Zéros de F(z)'+'
et pôles de 1/(1+C(z))'o'

*FIG.14a*

Constellation d'entrée

*FIG.14b*

Constellation de sortie

# FIG.15a

Erreur quadratique

Nombre de durées symboles

# FIG.15b

EQM estimée

Nombre de durées symboles

# FIG.16

Variance y(n) et z(n)

variance
de z(n)

variance
de y(n)

Nombre de durées symboles

# FIG.17

EQM estimée (100 épreuves)

Nombre de durées symboles

## FIG.18

## FIG.19